# EUROPÄISCHE PATENTSCHRIFT

(11) **EP 1 827 720 B1**
(45) Veröffentlichungstag und Bekanntmachung des Hinweises auf die Patenterteilung: **09.04.2008**
(21) Anmeldenummer: 05826584.4
(22) Anmeldetag: 14.12.2005
(51) Int. Cl.: B21B 1/46, B21B 1/26, C21D 8/02

(54) **VERFAHREN ZUM ERZEUGEN VON WARMBÄNDERN AUS LEICHTBAUSTAHL**
METHOD FOR PRODUCING HOT STRIPS CONSISTING OF LIGHTWEIGHT STEEL
PROCEDE POUR PRODUIRE DES FEUILLARDS A CHAUD EN ACIER DE CONSTRUCTION LEGER

(30) Priorität: 21.12.2004 DE 102004062637; 01.11.2005 DE 102005052774
(43) Veröffentlichungstag der Anmeldung: 05.09.2007
(73) Patentinhaber: Salzgitter Flachstahl GmbH, 38239 Salzgitter (DE)
(72) Erfinder: SPITZER, Karl-Heinz, 38678 Clausthal-Zellerfeld (DE); EICHHOLZ, Hellfried, 31241 Ilsede (DE); SCHÄPERKÖTTER, Markus, 38112 Braunschweig (DE); BORMANN, Guido, 38871 Ilsenburg (DE)
(74) Vertreter: Meissner, Peter E.
(86) Internationale Anmeldenummer: PCT/DE2005/002276
(87) Internationale Veröffentlichungsnummer: WO 2006/066551

(56) Entgegenhaltungen:
- DE-C1- 19 758 108
- US-A1- 2002 104 597
- US-B1- 6 290 787
- PATENT ABSTRACTS OF JAPAN Bd. 1997, Nr. 03, 31. März 1997 (1997-03-31) & JP 08 309406 A (HITACHI LTD), 26. November 1996 (1996-11-26)

## Beschreibung

Die Erfindung betrifft ein Verfahren zum Erzeugen von Warmbändern aus einem umformbaren, insbesondere gut kalt tiefziehfähigen Leichtbaustahl, bestehend aus den Hauptelementen Fe, Mn, Si und Al, der eine hohe Zugfestigkeit und TRIP - und/oder TWIP -Eigenschaften aufweist, gemäß dem Oberbegriff des Patentanspruchs 1.

Das gattungsbildende Verfahren zum Erzeugen von Warmbändern aus einem umformbaren, insbesondere gut kalt tiefziehfähigen Leichtbaustahl ist bekannt (steel research 74 (2003) No. 11 /12, S. 724 - 731).

Probleme bereitet bei solchen hochmanganhaltigen Stählen fertigungssicher ein feinkörniges sowie isometrisches Gefüge einzustellen.

In der DE 197 58 108 C1 ist ein Produktionsverfahren und eine Produktionsanlage zur endlosen Erzeugung von warmgewalzten dünnen Flachprodukten offenbart. Eine Schmelze eines nicht näher bezeichneten Stahles wird in einer horizontalen Bandgießanlage endabmessungsnah in einem Bereich zwischen 5 - 18 mm vergossen und vor Erreichen der eingerüstigen Vorstraße unter Schutzgasatmosphäre gesteuert gekühlt.

Das vorgewalzte Warmband wird in einer der Vorstraße nachgeordneten Einrichtung wahlweise gesteuert gekühlt, erwärmt oder auf Temperatur gehalten sowie die Kanten des Warmbandes nachgewärmt.

Der eingerüstigen Vorstraße folgt eine mehrgerüstige Fertigstraße, ein Auslaufrollgang mit einer Einrichtung zum Kühlen des Warmbandes sowie vor- und nachgeordnete Wickelmaschinen zum Aufwickeln des Warmbandes.
Die Walztemperatur vor der mehrgerüstigen Fertigstraße kann durch die hinter der Vorstraße angeordnete Einrichtung zum steuerbaren Kühlen, Heizen oder Halten der Temperatur des Warmbandes wahlweise im Austenit- oder im Ferritbereich oder im Übergangsbereich von Austenit zu Ferrit gezielt eingestellt werden.

Aufgabe der Erfindung ist es, ein Verfahren zum Erzeugen von Warmbändern aus einem umformbaren, insbesondere gut kalt tiefziehfähigen Leichtbaustahl anzugeben, mit dem die fertigungssichere Einstellung eines feinkörnigen vorzugsweise isometrischen Gefüges möglich ist.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung durchläuft das durch Bandgießen erzeugte Vorband eine unter Schutzgas stehende Einrichtung zur Homogenisierung in Verbindung mit einem wahlweisen Halten der Temperatur, Kühlen oder Heizen. Danach wird das Vorband einem mindestens einen Stich aufweisenden Warmwalzprozess mit einem Gesamtumformgrad von mindestens 50 % unterzogen. Nach dem letzten Stich wird das Warmband abgekühlt und gehaspelt. In Abhängigkeit des Verhältnisses von Gieß- zu Walzgeschwindigkeit erfolgt der Warmwalzprozess in line oder entkoppelt. Vorzugsweise beträgt der Gesamtumformgrad mehr als 70 %.

Das Durchlaufen der Homogenisierungszone soll einen Temperaturausgleich über die Fläche und einen Spannungsabbau bewirken, unabhängig davon ob das Temperaturniveau dabei gehalten oder durch Kühlen bzw. Heizen abgesenkt bzw. erhöht wird.

Für die Frage eines in line oder separaten Warmwalzprozesses ist das Verhältnis von Gießgeschwindigkeit zu Walzgeschwindigkeit entscheidend. Sind beide Geschwindigkeiten etwa gleich, ist ein in line Walzen möglich. Ist dagegen die Gießgeschwindigkeit signifikant geringer oder größer als die Walzgeschwindigkeit, muss eine Entkoppelung zwischen Gießen und Warmwalzen vorgenommen werden.
Geschwindigkeitsbestimmend ist im Regelfall die Walzgeschwindigkeit im ersten Gerüst, die hoch genug sein muss, damit die Umformung in einem bestimmten Temperaturfenster stattfinden kann. Ist die Walzgeschwindigkeit zu niedrig, sinkt die Umformtemperatur und die erforderlichen Walzkräfte steigen stark an. Man könnte zwar versuchen durch Veränderung der Länge der Bandgießmaschine die dann mögliche Gießgeschwindigkeit der entsprechenden Walzgeschwindigkeit im ersten Gerüst anzupassen, hätte aber keine Variationsmöglichkeit mehr.

Dies bedeutet, dass bei einer Beschränkung auf nur eine Stahlgüte anlagentechnisch die Bedingung Gießgeschwindigkeit = Walzgeschwindigkeit im ersten Gerüst erfüllbar wäre, bei der größeren Wahrscheinlichkeit der Nutzung einer solchen Anlage für ein größeres Spektrum unterschiedlicher Stahlgüten einem entkoppelten Anlagenkonzept der Vorrang gegeben werden würde.

Neben der Betrachtung des Geschwindigkeitsverhältnisses ist das Rekristallisationsverhalten von Bedeutung. Die beiden Grenzfälle sind eine vollständige Rekristallisation während der Umformung (dynamisch) im Unterschied zu einer Rekristallisation nach der Umformung (statisch). Die tatsächlichen Verhältnisse stellen eine Mischform dar, wobei je nach Bedingungen einmal das dynamische oder das statische Verhalten überwiegend ist.

Die vorgeschlagene Entkoppelung hat den Vorteil, dass man die Gießgeschwindigkeit in Abhängigkeit von der Legierungszusammensetzung des Stahles hinsichtlich optimaler Erstarrungsbedingungen wählen kann, unabhängig vom Takt des nachfolgenden Warmwalzprozesses. Das zuvor genannte in line Warmwalzen hat dagegen den Vorteil hoher Produktivität, wobei wahlweise ganz oder teilweise auf die endgültige Dicke gewalzt wird.

Bei einer in line Warmwalzung ist das Gefüge zum Teil nicht ausreichend rekristallisiert, so dass die endgültige Einstellung der Werkstoffeigenschaften vorzugsweise über einen nachgeschalteten Glühprozess und/oder kombinierte Glüh- und Kaltwalzprozesse erfolgt.

Bei einer entkoppelten Fahrweise wird im einfachsten Fall das Vorband nach der Durcherstarrung und dem Durchlaufen der Homogenisierungszone direkt gehaspelt. Dies setzt voraus, dass das Gussgefüge des Vorbandes so ausgebildet ist, dass ein Haspeln und Enthaspein möglich ist. Im Regelfall wird man das Vorband einem ersten Anstich unterziehen, der zumindest für eine Teilrekristallisation der Außenbereiche des Bandes ausreicht, um das Band problemlos haspeln zu können.

Der eigentliche Warmwalzprozess erfolgt im Steckelbetrieb bei definierter Temperatur, wobei nach Erreichen des vorgegebenen Umformgrades das fertige Warmband gekühlt und gehaspelt wird.

Je nach Anlagenanordnung kann es erforderlich sein, das Coil vor dem Entcoilen auf eine vorgegebene Temperatur einzustellen. Alternativ kann der Warmwalzprozess in einer Fertigstaffel mit mindestens drei Stichabnahmen erfolgen.

Auch bei dieser Verfahrensweise wird es als vorteilhaft angesehen, das Vorband einem ersten Anstich zu unterziehen. Je nach Legierungszusammensetzung und angestrebter Gefügeausbildung kann es erforderlich sein, zwischen dem ersten Anstich und der Fertigstaffel eine Zwischenerwärmung vorzusehen.

Alle so hergestellten Warmbänder sind kalt umformbar und durch gezielte Kaltumformungen (z. B. Walzen, Strecken, Tiefziehen) mit erforderlichenfalls zwischengeschalteten Glühprozessen ist es möglich, ein weites Spektrum von unterschiedlichen Eigenschaften in Bezug auf Festigkeit, Duktilität und Gefügeisometrie einzustellen.

Die Entscheidung, ob nach der letzten Warmumformung nur ein rekristallisierendes Glühen oder nur eine Kaltumformung oder eine Kombination aus beiden erforderlich ist, hängt immer vom Grad der erreichten Rekristallisation nach der Warmumformung ab und von den angestrebten technologischen Eigenschaften einschließlich der Gefügeisometrie.

Vorzugsweise eignet sich das erfindungsgemäße Verfahren für die Erzeugung von Warmbändern aus einem Leichtbaustahl mit folgenden Gehalten C = 0,04 - 1,0 %, Mn = 9 - 30 %, Si = 0,0 - 6,0 %, Al = 0,05 < 12 %.
Günstige Werte werden erreicht bei einem Si-Gehalt von 2,0 - 4,0 % und einem Al-Gehalt von 2,0 - 3,0 %. Für den Mn-Gehalt kann ein oberer Bereich (22 - 30 %) und ein unterer Bereich (9 - 18 %) angesteuert werden, je nachdem ob TRIP- oder TWIP-Eigenschaften überwiegen sollen. Der mittlere Mn-Bereich (18 - 22 %) wird für ein ausgewogenes Verhältnis von TRIP- und TWIP-Eigenschaften bevorzugt.

Weitere Merkmale, Vorteile und Einzelheiten der Erfindung ergeben sich aus der nachfolgenden Beschreibung von mehreren in einer Zeichnung dargestellten Ausführungsbeispielen.

Es zeigen:
- **Figur 1**: schematisch den erfindungsgemäßen Verfahrensablauf für die Bedingung Gießgeschwindigkeit = Walzgeschwindigkeit,
- **Figur 2**: schematisch den erfindungsgemäßen Verfahrensablauf für die Bedingung Gießgeschwindigkeit ≠ Walzgeschwindigkeit mit der Variante Steckelbetrieb,
- **Figur 3**: wie Figur 2, aber mit der Variante Fertigstaffel.

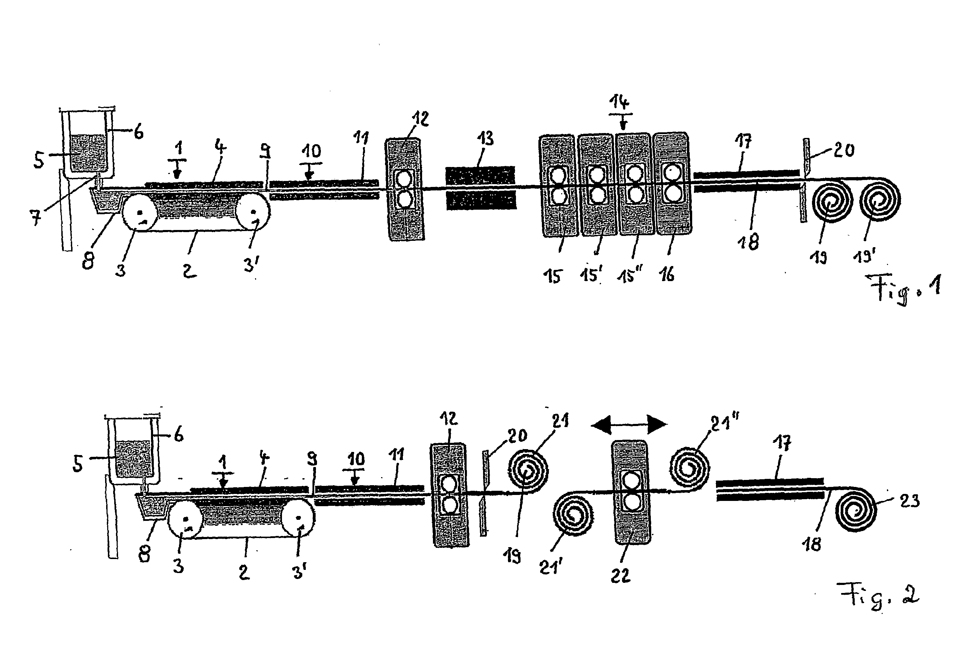

In **Figur 1** ist schematisch ein erfindungsgemäßer Verfahrensablauf für die Bedingung Gießgeschwindigkeit etwa gleich Walzgeschwindigkeit dargestellt. Dem Warmwalzprozess vorgeschaltet ist das Gießverfahren mit einer horizontalen Bandgießanlage 1, bestehend aus einem umlaufenden Förderband 2 und zwei Umlenkrollen 3, 3'. Zu erkennen, ist auch eine Seitenabdichtung 4, die verhindert, dass die aufgegebene Schmelze 5 rechts und links vom Förderband 2 herunterfließen kann. Die Schmelze 5 wird mittels einer Pfanne 6 an die Bandgießanlage 1 transportiert und fließt durch eine im Boden angebrachte Öffnung 7 in ein Zulaufgefäß 8. Dieses Zulaufgefäß 8 ist wie ein Überlaufgefäß ausgebildet.

Nicht dargestellt sind die Einrichtungen zur intensiven Kühlung der Unterseite des Obertrums des Förderbandes 2 sowie die vollständige Einhausung der Bandgießanlage 1 mit entsprechender Schutzgasatmosphäre.

Nach Aufgabe der Schmelze 5 auf das umlaufende Förderband 2 kommt es infolge der intensiven Kühlung zur Erstarrung und zur Bildung eines Vorbandes 9, das am Ende des Förderbandes 2 weitestgehend durcherstarrt ist.

Zum Temperaturausgleich und Spannungsabbau schließt sich an die Bandgießanlage 1 eine Homogenisierungszone 10 an. Diese besteht aus einer wärmegedämmten Einhausung 11 und einem hier nicht dargestellten Rollgang. Diese Einrichtung kann wahlweise dazu benutzt werden die Temperatur des Vorbandes 9 zu halten oder das Vorband 9 weiter abzukühlen alternativ es etwas aufzuheizen.

Das dann nachfolgende erste Gerüst 12 ist entweder nur als reines Treiberaggregat mit einem geringen Anstich oder als Walzenaggregat mit einem vorgegebenen Anstich ausgebildet.

Je nach Legierungszusammensetzung und angestrebter Gefügeausbildung läuft das Vorband direkt in die Fertigstaffel oder es ist eine Zwischenerwärmung erforderlich. Vorteilhafterweise hier als induktive Erwärmung z. B. in Form einer Spule13 ausgebildet. Die eigentliche Warmumformung findet in der nachfolgenden Fertigstaffel 14 statt, wobei die ersten drei Gerüste 15, 15', 15" die eigentliche Stichabnahme bewirken, während das letzte Gerüst 16 als Glättwalzwerk ausgebildet ist.

Nach dem letzten Stich folgt eine Kühlzone 17, in der das fertige Warmband bis auf Haspeltemperatur heruntergekühlt wird.

Zwischen Ende der Kühlstrecke 17 und Haspel 19, 19' ist eine Schere 20 angeordnet. Diese Schere 20 hat die Aufgabe, das Warmband 18 quer zu teilen, sobald einer der beiden Haspel 19, 19' vollgewickelt ist. Der Anfang des nachfolgenden Warmbandes 18 wird dann auf den zweiten frei gewordenen Haspel 19, 19' geleitet. Dadurch wird sichergestellt, dass der Bandzug über die gesamte Bandlänge aufrecht erhalten bleibt. Dies ist insbesondere bei der Erzeugung dünner Warmbänder von Bedeutung.

**Figur 2** zeigt den Verfahrensablauf für die Bedingung, dass Gießgeschwindigkeit ≠ Walzgeschwindigkeit ist. Dies bedeutet, dass die Gießgeschwindigkeit signifikant größer oder geringer sein kann als die Walzgeschwindigkeit.

Die Aufgabe der Schmelze 5 auf die Bandgießanlage 1 sowie die Erstarrung zum Vorband 9 ist gleich dem in **Figur 1** dargestellten Verfahren, so dass sich eine Wiederholung erübrigt.

Wie schon zu **Figur 1** erläutert, kann das erste Gerüst 12 nach der Homogenisierungszone 10 nur Treibaggregat sein oder Walzgerüst mit vorgegebener Stichabnahme. Eine Reduzierung der Funktion nur auf ein Treiben des Vorbandes 9 ist nur möglich, wenn das Gussgefüge es zulässt, dass das Vorband 9 gehaspelt werden kann. Im Regelfall wird immer ein gewisser Anstich erforderlich sein.

Um das aufgewickelte Coil 21 vom Haspel 19 nehmen zu können, ist nach dem ersten Gerüst 12 eine Schere 20 zum Querteilen des Vorbandes 9 angeordnet. Je nach Taktfolge kann die Anordnung eines zweiten Haspel (hier nicht dargestellt) erforderlich sein.

Die eigentliche Warmumformung findet abgekoppelt vom Gießprozess in einer separaten Anlage statt.

In diesem Ausführungsbeispiel wird ein Reversiergerüst 22 verwendet, auch als "steckel mill" bezeichnet, bei dem abwechselnd mal von links nach rechts und von rechts nach links gewalzt und wieder gehaspelt wird. Nicht dargestellt ist die Möglichkeit eines Einstellens der Temperatur während des Walzens in sogenannten Warmhalteboxen. Ebenfalls nicht dargestellt ist die Möglichkeit zwischen Gießanlage und Reversiergerüst 22 einen Ofen anzuordnen, um das gewickelte Coil 21 vor dem Entcoilen auf eine vorgegebene Temperatur einzustellen.

Nach dem letzten Warmumformstich kann die rechte Auslaufseite des Reversiergerüstes 22 umgestellt werden, so dass das fertige Warmband 18 eine Kühlstrecke 17 durchläuft und das Warmband 18 zu einem Fertigcoil 23 gehaspelt wird.

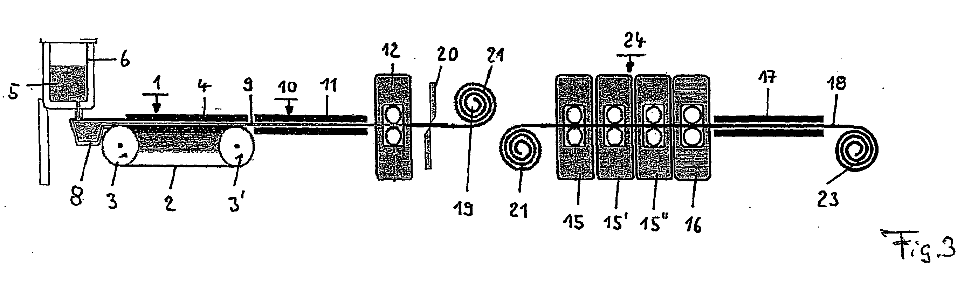

Im Unterschied zu **Figur 2** ist in **Figur 3** dargestellt, die eigentliche Warmumformung in einer Fertigstaffel 24 durchzuführen. Dazu wird das gehaspelte Coil 21 zur Fertigstaffel 24 transportiert und der Bandanfang in das erste Gerüst 15 der Fertigstaffel 24 eingefädelt.

In diesem Ausführungsbeispiel besteht die Fertigstaffel 24 aus drei Walzgerüsten 15, 15', 15" und einem Glättwalzgerüst 16. Nach Verlassen des Glättwalzgerüstes 16 durchläuft das fertige Warmband 18 eine Kühlstrecke und wird bei vorgegebener Haspeltemperatur zu einem Fertigcoil 23 gehaspelt.

### Bezugszeichenliste

| **Nr.** | **Bezeichnung** |
|---|---|
| 1 | Bandgießanlage |
| 2 | Förderband |
| 3, 3' | Umlenkrolle |
| 4 | Seitenabdichtung |
| 5 | Schmelze |
| 6 | Pfanne |
| 7 | Öffnung |
| 8 | Zulaufgefäß |
| 9 | Vorband |
| 10 | Homogenisierungszone |
| 11 | Einhausung |
| 12 | erstes Gerüst |
| 13 | Induktionsspule |
| 14 | Fertigstaffel |
| 15, 15', 15" | Walzgerüst |
| 16 | Glättgerüst |
| 17 | Kühlstrecke |
| 18 | fertiges Warmband |
| 19, 19' | Haspel |
| 20 | Schere |
| 21, 21', 21" | Coil |
| 22 | Reversiergerüst |
| 23 | Fertigcoil |
| 24 | Fertigstaffel |

## Patentansprüche

1. Verfahren zum Erzeugen von Warmbändern aus einem umformbaren, insbesondere gut kalt tiefziehfähigen, Leichtbaustahl, bestehend aus den Hauptelementen Fe, Mn, Si und Al, der eine hohe Zugfestigkeit und TRIP- und/oder TWIP-Eigenschaften aufweist, wobei eine Schmelze in einer horizontalen Bandgießanlage (1) endabmessungsnah zu einem Vorband (9) im Bereich zwischen 6 und 20 mm unter Schutzgas vergossen und nach der Durcherstarrung und vor Beginn eines Warmwalzprozesses das Vorband temperaturmäßig eingestellt wird
**dadurch gekennzeichnet,**
**dass** das Vorband (9) eine unter Schutzgas stehende Einrichtung zur Homogenisierung (10) in Verbindung mit einem wahlweisen Halten der Temperatur, Kühlen oder Heizen durchläuft und danach einem mindestens einen Stich aufweisenden Warmwalzprozess mit einem Gesamtumformgrad von mindestens 50 % unterzogen und nach einem Abkühlen als Warmband gehaspelt wird, wobei in Abhängigkeit des Verhältnisses von Gießgeschwindigkeit zu Walzgeschwindigkeit der Warmwalzprozess in line oder entkoppelt erfolgt.

2. Verfahren nach Anspruch 1
**dadurch gekennzeichnet,**
**dass** der Gesamtumformgrad >70 % ist.

3. Verfahren nach den Ansprüchen 1 und 2
**dadurch gekennzeichnet,**
**dass** auf das Vorband (9) unmittelbar nach Durchlaufen der Homogenisierungszone ein erster Anstich aufgegeben wird.

4. Verfahren nach den Ansprüchen 1 - 3
**dadurch gekennzeichnet,**
**dass** unter der Voraussetzung, dass die Gießgeschwindigkeit etwa gleich ist der Walzgeschwindigkeit der Warmwalzprozess in line erfolgt.

5. Verfahren nach Anspruch 4
**dadurch gekennzeichnet,**
**dass** nach dem ersten Anstich eine Zwischenerwärmung vorgenommen wird und anschließend mindestens eine Stichabnahme des Warmwalzprozesses erfolgt, bevor das Warmband (18) gekühlt und gehaspelt wird.

6. Verfahren nach Anspruch 5
**dadurch gekennzeichnet,**
**dass** der Warmwalzprozess mindestens drei Stichabnahmen umfasst.

7. Verfahren nach Anspruch 1 und 3
**dadurch gekennzeichnet,**
**dass** unter der Voraussetzung, dass die Gießgeschwindigkeit signifikant geringer oder größer ist als die Walzgeschwindigkeit, das Vorband (9) nach dem ersten Anstich nur gehaspelt wird und der Warmwalzprozess nach dem Entcoilen separat erfolgt.

8. Verfahren nach Anspruch 7
**dadurch gekennzeichnet,**
**dass** der Warmwalzprozess im Steckelbetrieb bei eingestellter Temperatur erfolgt und nach Erreichen des vorgegebenen Umformgrades das Warmband gekühlt und gehaspelt wird.

9. Verfahren nach Anspruch 8
**dadurch gekennzeichnet,**
**dass** vor dem Entcoilen das Coil für den Warmwalzprozess auf einer vorgegebenen Temperatur gehalten wird.

10. Verfahren nach Anspruch 7
**dadurch gekennzeichnet,**
**dass** der Warmwalzprozess in einer Fertigstaffel (14) erfolgt und nach Durchlauf durch das letzte Gerüst (16) der Fertigstaffel (14) das Warmband gekühlt und gehaspelt wird.

11. Verfahren nach den Ansprüchen 1 - 10
**dadurch gekennzeichnet,**
**dass** das Warmband (18) nach der letzten Warmumformung nur rekristallisierend geglüht wird.

12. Verfahren nach den Ansprüchen 1 - 10
**dadurch gekennzeichnet,**
**dass** das gecoilte Warmband enthaspelt und einer Kaltumformung mit mindestens einem Stich unterzogen wird.

13. Verfahren nach Anspruch 12
**dadurch gekennzeichnet,**
**dass** die Kaltumformung mehrere Stiche umfasst mit erforderlichenfalls eingeschobenen Zwischenglühungen.

14. Verfahren nach Anspruch 12 und 13
**dadurch gekennzeichnet,**
**dass** das Warmband (18) vor der Kaltumformung im Coil oder in line rekristallisierend geglüht wird.

15. Verfahren nach einem der vorstehenden Ansprüche
**dadurch gekennzeichnet,**
**dass** der Stahl Kohlenstoff im Bereich von 0,04 bis 1,0 Gew.-% enthält.

16. Verfahren nach einem der vorstehenden Ansprüche
**dadurch gekennzeichnet,**
**dass** der Stahl Mangan im Bereich von 9,0 bis 30,0 Gew.-% enthält.

17. Verfahren nach einem der vorstehenden Ansprüche
**dadurch gekennzeichnet,**
**dass** der Stahl Silizium im Bereich von 0,0 bis 6,0 Gew.-% enthält.

18. Verfahren nach einem der vorstehenden Ansprüche
**dadurch gekennzeichnet,**
**dass** der Stahl Aluminium im Bereich von 0,05 bis 12 Gew.-% enthält.

19. Verfahren nach Anspruch 18
**dadurch gekennzeichnet,**
**dass** der Si-Gehalt 2,0 bis 4,0 Gew.-% beträgt.

20. Verfahren nach Anspruch 18
**dadurch gekennzeichnet,**
**dass** der Al-Gehalt 2,0 bis 3,0 Gew.-% beträgt.

21. Verfahren nach Anspruch 16
**dadurch gekennzeichnet,**
**dass** der Mn-Gehalt 9 bis 18 Gew.-% beträgt.

22. Verfahren nach Anspruch 16
**dadurch gekennzeichnet,**
**dass** der Mn-Gehalt 18 bis 22 Gew.-% beträgt.

23. Verfahren nach Anspruch 16
**dadurch gekennzeichnet,**
**dass** der Mn-Gehalt 22 bis 30 Gew.-% beträgt.

## Claims

1. Method for producing hot strips from a deformable, in particular readily cold deep-drawable, lightweight structural steel, composed of the main elements Fe, Mn, Si and Al and having a high tensile strength and TRIP and/or TWIP properties, in which method a melt is cast in a horizontal strip casting plant (1) with near final dimensions as a roughed strip (9) in the range between 6 and 20 mm under protective gas, and after full solidification and before the start of a hot-rolling process the temperature of the roughed strip is set,
**characterised**
**in that** the roughed strip (9) passes through a device for homogenisation (10) in conjunction with optional maintaining of the temperature, cooling or heating, and thereafter is subjected to a hot-rolling process having at least one pass and with a total degree of deformation of at least 50%, and after cooling is coiled as hot strip, the hot-rolling process taking place in line or decoupled, depending on the ratio of casting speed to rolling speed.

2. Method according to Claim 1,
**characterised**
**in that** the total degree of deformation is >70%.

3. Method according to Claims 1 and 2,
**characterised**
**in that** a first pass is performed on the roughed strip (9) immediately after it has passed through the homogenising zone.

4. Method according to Claims 1 - 3,
**characterised**
**in that** the hot-rolling process takes place in line, on condition that the casting speed is approximately equal to the rolling speed.

5. Method according to Claim 4,
**characterised**
**in that** intermediate heating is carried out after the first pass, and subsequently at least one pass reduction of the hot-rolling process takes place before the hot strip (18) is cooled and coiled.

6. Method according to Claim 5,
**characterised**
**in that** the hot-rolling process comprises at least three pass reductions.

7. Method according to Claim 1 and 3,
**characterised**
**in that** the roughed strip. (9) is only coiled after the first pass, and the hot-rolling process takes place separately after uncoiling, on condition that the casting speed is significantly less or greater than the rolling speed.

8. Method according to Claim 7,
**characterised**
**in that** the hot-rolling process takes place in Steckel mode at a set temperature, and after the hot strip has reached the predetermined degree of deformation the hot strip is cooled and coiled.

9. Method according to Claim 8,
**characterised**
**in that** the coil for the hot-rolling process is maintained at a predetermined temperature before uncoiling.

10. Method according to Claim 7,
**characterised**
**in that** the hot-rolling process takes place in a finishing mill train (14), and the hot strip is cooled and coiled after passing through the last stand (16) of the finishing mill train (14).

11. Method according to Claims 1 - 10,
**characterised**
**in that** the hot strip (18) only undergoes recrystallisation annealing after the last hot deformation.

12. Method according to Claims 1 - 10,
**characterised**
**in that** the coiled hot strip is uncoiled and subjected to cold deformation with at least one pass.

13. Method according to Claim 12,
**characterised**
**in that** the cold deformation comprises a plurality of passes with intermediate annealing if required.

14. Method according to Claim 12 and 13,
**characterised**
**in that** the hot strip (18.) undergoes recrystallisation annealing in the coil or in line before the cold deformation.

15. Method according to one of the preceding claims,
**characterised**
**in that** the steel contains carbon in the range from 0.04 to 1.0% by weight.

16. Method according to one of the preceding claims,
**characterised**
**in that** the steel contains manganese in the range from 9.0 to 30.0% weight.

17. Method according to one of the preceding claims,
**characterised**
**in that** the steel contains silicon in the range from 0.0 to 6.0% by weight.

18. Method according to one of the preceding claims,
**characterised**
**in that** the steel contains aluminium in the range from 0.05 to 12% by weight.

19. Method according to Claim 18,
**characterised**
**in that** the Si content is 2.0 to 4.0% by weight.

20. Method according to Claim 18,
**characterised**
**in that** the Al content is 2.0 to 3.0% by weight.

21. Method according to Claim 16,
**characterised**
**in that** the Mn content is 9 to 18% by weight.

22. Method according to Claim 16,
**characterised**
**in that** the Mn content is 18 to 22% by weight.

23. Method according to Claim 16,
**characterised**
**in that** the Mn content is 22 to 30% by weight.

## Revendications

1. Procédé destiné à produire des feuillards à chaud à partir d'un acier de construction léger déformable, notamment apte à l'emboutissage à froid, composé des éléments principaux Fe, Mn, Si et AI, lequel acier présente une résistance élevée à la traction et des propriétés TRIP et/ou TWIP, une masse fondue étant coulée sous gaz inerte dans une installation de coulée horizontale pour feuillards (1) proche de la dimension définitive pour former une ébauche de feuillard (9) comprise entre 6 et 20 mm et la température de l'ébauche de feuillard étant réglée après la solidification à coeur et avant le début du procédé de laminage à chaud,
**caractérisé en ce que** l'ébauche de feuillard (9) traverse un dispositif d'homogénéisation (10) sous gaz inerte en liaison avec au choix un maintien de la température, un refroidissement ou un réchauffement et **en ce que**, après cela, elle est soumise à un procédé de laminage à chaud présentant au moins une passe et un taux de déformation total d'au moins 50 % et enroulée en tant que feuillard à chaud après un refroidissement, le procédé de laminage à chaud ayant lieu en ligne ou de manière découplée en fonction du rapport vitesse de coulée - vitesse de laminage.

2. Procédé selon la revendication 1,
**caractérisé en ce que** le taux de déformation total est supérieur à 70 %.

3. Procédé selon les revendications 1 et 2,
**caractérisé en ce qu'**il est effectué une première passe initiale sur l'ébauche de feuillard (9) immédiatement après la traversée de la zone d'homogénéisation.

4. Procédé selon les revendications 1 à 3,
**caractérisé en ce que** le procédé de laminage à chaud a lieu en ligne à condition que la vitesse de coulée soit à peu près égale à la vitesse de laminage.

5. Procédé selon la revendication 4,
**caractérisé en ce que**, après la première passe initiale; il est réalisé un réchauffement intermédiaire et il se produit ensuite au moins une réduction dans le procédé de laminage à chaud avant que le feuillard à chaud (18) ne soit refroidi et enroulé.

6. Procédé selon la revendication 5,
**caractérisé en ce que** le procédé de laminage à chaud comporte au moins trois réductions aux différentes passes.

7. Procédé selon les revendications 1 et 3,
**caractérisé en ce que**, si la vitesse de coulée est beaucoup plus lente ou beaucoup plus rapide que la vitesse de laminage, l'ébauche de feuillard (9) est simplement enroulée après la première passe initiale et le procédé de laminage à chaud a lieu séparément après le déroulement de la bobine.

8. Procédé selon la revendication 7,
**caractérisé en ce que** le procédé de laminage à chaud a lieu dans le laminoir Steckel à une température réglée et, après obtention du taux de déformation prédéterminé, le feuillard à chaud est refroidi et enroulé.

9. Procédé selon la revendication 8,
**caractérisé en ce que**, avant son déroulement, la bobine destinée au procédé de laminage à chaud est maintenue à une température prédéfinie.

10. Procédé selon la revendication 7,
**caractérisé en ce que** le procédé de laminage à chaud a lieu dans un groupe finisseur (14) et **en ce que**, après avoir traversé la dernière cage (16) du groupe finisseur (14), le feuillard à chaud est refroidi et enroulé.

11. Procédé selon les revendications 1 à 10,
**caractérisé en ce que** le feuillard à chaud (18) est seulement soumis à un recuit de recristallisation après la dernière déformation à chaud.

12. Procédé selon les revendications 1 à 10,
**caractérisé en ce que** le feuillard à chaud embobiné est déroulé et soumis à une déformation à froid comportant au moins une passe.

13. Procédé selon la revendication 12,
**caractérisé en ce que** la déformation à froid comporte plusieurs passes avec, si nécessaire, des recuits intermédiaires intercalés.

14. Procédé selon les revendications 12 et 13,
**caractérisé en ce que** le feuillard à chaud (18) subit un recuit de recristallisation en bobine ou en ligne avant la déformation à froid.

15. Procédé selon l'une des revendications précédentes,
**caractérisé en ce que** l'acier contient entre 0,04 et 1,0 % en poids de carbone.

16. Procédé selon l'une des revendications précédentes,
**caractérisé en ce que** l'acier contient entre 9,0 et 30,0 % en poids de manganèse.

17. Procédé selon l'une des revendications précédentes,
**caractérisé en ce que** l'acier contient entre 0,0 et 6,0 % en poids de silicium.

18. Procédé selon l'une des revendications précédentes,
**caractérisé en ce que** l'acier contient entre 0,05 et 12 % en poids d'aluminium.

19. Procédé selon la revendication 18,
**caractérisé en ce que** la teneur en Si est comprise entre 2,0 et 4,0 % en poids.

20. Procédé selon la revendication 18,
**caractérisé en ce que** la teneur en Al est comprise entre 2,0 et 3,0 % en poids.

21. Procédé selon la revendication 16,
**caractérisé en ce que** la teneur en Mn est comprise entre 9 et 18 % en poids.

22. Procédé selon la revendication 16,
**caractérisé en ce que** la teneur en Mn est comprise entre 18 et 22 % en poids.

23. Procédé selon la revendication 16,
**caractérisé en ce que** la teneur en Mn est comprise entre 22 et 30 % en poids.
